# EUROPÄISCHE PATENTANMELDUNG

(11) **EP 3 521 102 A1**
(43) Veröffentlichungstag der Anmeldung: **07.08.2019**
(21) Anmeldenummer: 19154752.0
(22) Anmeldetag: 31.01.2019
(51) Int. Cl.: B60L 53/66, B60L 53/62, G07F 15/00, G06Q 50/06, G06Q 50/30

(54) **VERFAHREN ZUR ÜBERPRÜFUNG EINES VON EINEM ENERGIEZÄHLER BEREITGESTELLTEN ZÄHLERSTANDES SOWIE ENTSPRECHENDES LADESYSTEM**

(30) Priorität: 31.01.2018 DE 102018201475
(71) Anmelder: BOB Holding GmbH, 97332 Volkach (DE)
(72) Erfinder: BECK, Bernhard, 97332 Volkach (DE)
(74) Vertreter: FDST Patentanwälte

(57) **Zusammenfassung**

Die Erfindung betrifft ein Verfahren zur Überprüfung eines von einem Energiezähler einer Ladestation für ein elektrisch angetriebenes Kraftfahrzeug bereitgestellten Zählerstandes, wobei ein Startzählerstand der Ladestation zu Beginn und ein Endzählerstand nach Abschluss eines Ladevorgangs des elektrisch angetriebenen Kraftfahrzeugs erfasst wird, wobei ein Datenpaket mit einem Datenblock erstellt wird, der eine den Startzählerstand und/oder den Endzählerstand des Ladevorgangs repräsentierende Information aufweist, oder wobei ein Datenpaket erstellt wird, welches sowohl einen Datenblock mit einer den Startzählerstand und/oder den Endzählerstand des Ladevorgangs repräsentierende Information als auch eine Anzahl an weiteren Datenblöcken aufweist, die jeweils eine den Startzählerstand und/oder den Endzählerstand zumindest eines zeitlich vorangehenden und/oder zumindest eines zeitlich nachfolgenden Ladevorgangs repräsentierende Information aufweist, wobei das Datenpaket an eine Überprüfungseinheit übermittelt und/oder dort hinterlegt wird, wobei die den Startzählerstand und/oder den Endzählerstand repräsentierende Information einer der Datenblöcke mit der den Startzählerstand und/oder den Endzählerstand repräsentierenden Information des oder eines nachfolgenden Datenblock verglichen wird, und/oder wobei die den Endzählerstand repräsentierende Information des in der Überprüfungseinheit hinterlegten Datenblocks des zeitlich letzten Ladevorgangs mit dem Zählerstand der Ladestation verglichen wird. Ferner betrifft die Erfindung eine Überprüfungseinheit zur Überprüfung eines von einem Energiezähler einer Ladestation für ein elektrisch angetriebenes Kraftfahrzeug bereitgestellten Zählerstandes sowie ein Ladesystem mit einer solchen Überprüfungseinheit.

## Beschreibung

Die Erfindung betrifft ein Verfahren zur Überprüfung eines von einem Energiezähler einer Ladestation für ein elektrisch angetriebenes Kraftfahrzeug bereitgestellten Zählerstandes, eine Überprüfungseinheit zur Überprüfung eines solchen Zählerstandes sowie ein Ladesystem mit einer solchen Überprüfungseinheit.

Bei Ladesystemen für elektrisch angetriebene Fahrzeuge ist es denkbar, dass der für einen Ladevorgang von einer Ladestation bereitgestellte Strom bzw. die für den Ladevorgang bereitgestellte Energie nicht ermittelt (gemessen) wird. Auch ist es denkbar, dass der bereitgestellte (elektrische) Strom bzw. die bereitgestellte Energie zwar mittels eines Energiezählers gemessen, jedoch nicht, insbesondere für einen Nutzer des Kraftfahrzeugs, angezeigt wird. Des Weiteren kann der mittels des Energiezählers erfasste Wert an der Ladestation sichtbar angezeigt und/oder an einen Abrechnungscomputer übermittelt werden, welcher den erfassten Wert und/oder einen daraus ermittelten Tarif (Kosten) anzeigt.

Insbesondere wird beim Ladevorgang die Energie durch eine zeitlich begrenzte Energiezufuhr, beispielsweise einem (Energie-)Puls einer definierten Zeitdauer, bereitgestellt. Dieser ist insbesondere mittels eines entsprechenden Spannungs- oder Strompulses realisiert. Zur Bestimmung der für den Ladevorgang bereitgestellten Energie misst der Energiezähler beispielsweise eine Anzahl von abgegebenen Energiepulsen. Dabei weist insbesondere jeder der abgegebenen Energiepulse denselben Energiewert auf, beispielsweise 0,01kWh/Puls.

Dabei könnten die ermittelten (erfassten) Werte (Messdaten) vergleichsweise einfach manipuliert werden. Insbesondere sofern diese dem Nutzer nicht angezeigt werden, kann der Nutzer (Kunde) weder die Messung noch eine daraus ermittelte Abrechnung, insbesondere die Kosten, überprüfen.

Beispielsweise können zur Vermeidung einer solchen Manipulation die mittels Energiezähler erfassten Messdaten mittels einer, insbesondere separaten, Hardware und Software (Container) ausgelesen und verschlüsselt werden. Anschließend könnten die verschlüsselten Messwerte an den Abrechnungscomputer (Abrechnungssystem) übermittelt und an Kunden verrechnet werden. Zusammenfassend würde die Verschlüsselung also einem Schutz der Messdaten gegen eine Manipulation dienen. Jedoch ist eine solche Verschlüsselung vergleichsweise aufwändig, und es verbleibt auch bei einem vergleichsweise hohen Schutz aufgrund der Verschlüsselung die Möglichkeit zur Manipulation der Messdaten.

Der Erfindung liegt die Aufgabe zugrunde ein geeignetes Verfahren zur Überprüfung eines von einem Energiezähler einer Ladestation bereitgestellten Zählerstandes anzugeben. Insbesondere sollen hierbei eine Manipulation des Zählerstandes und/oder der diesen repräsentierenden Information vermieden sein. Des Weiteren soll eine hierzu geeignete Überprüfungseinheit sowie ein entsprechendes Ladesystem angegeben werden

Hinsichtlich des Verfahrens wird diese Aufgabe erfindungsgemäß gelöst durch die Merkmale des Anspruchs 1. Hinsichtlich der Überprüfungseinheit wird die Aufgabe mit den Merkmalen des Anspruchs 8 und bezüglich des Ladesystems mit den Merkmalen des Anspruchs 9 erfindungsgemäß gelöst. Vorteilhafte Weiterbildungen und Ausgestaltungen sind Gegenstand der Unteransprüche. Dabei gelten die Ausführungen im Zusammenhang mit dem Verfahren sinngemäß auch für das Ladesystem sowie für die Überprüfungseinheit und umgekehrt.

Erfindungsgemäß ist ein Verfahren zur Überprüfung eines von einem Energiezähler einer Ladestation für ein elektrisch angetriebenes Kraftfahrzeug bereitgestellten Zählerstandes vorgesehen. Das Verfahren umfasst insbesondere das Erfassen eines Startzählerstandes (Anfangszählerstandes, -wert) der Ladestation zu Beginn und/oder eines Endzählerstand (Endzählerwert) nach Abschluss (also am Ende) eines Ladevorgangs des elektrisch angetriebenen Kraftfahrzeugs. Mit anderen Worten werden insbesondere der Startzählerstand und der Endzählerstand vom Energiezähler bereitgestellt und beispielsweise zusätzlich mittels eines Abrechnungscomputers (Abrechnungseinheit) ausgelesen und/oder an diese weitergeleitet. Alternativ kann beispielsweise der Startzählerstand erfasst, insbesondere mittels des Abrechnungscomputers, ausgelesen und der Endzählerstand mittels Auslesen der abgegebenen (Energie-)Pulse ermittelt werden.

Beispielsweise ist es auf diese Weise ermöglicht, den Startzählerstand und/oder den Endzählerstand und/oder mittels einer Differenzbildung dieser beiden Werte die beim Ladevorgang bezogene Energie(-menge), insbesondere für den Kunden (Benutzer), anzuzeigen. Folglich hat der Kunde eine Möglichkeit zur Kenntnisnahme der Zählerwerte und/oder der beim Ladevorgang bezogenen Energie.

Dabei wird ein Datenpaket mit einem Datenblock erstellt, der eine den Startzählerstand und/oder den Endzählerstand des Ladevorgangs repräsentierende Information aufweist. Alternativ hierzu wird ein Datenpaket erstellt, welches sowohl einen Datenblock mit einer den Startzählerstand und/oder den Endzählerstand des Ladevorgangs repräsentierende Information als auch eine Anzahl an weiteren Datenblöcken aufweist, die jeweils eine den Startzählerstand und/oder den Endzählerstand zumindest eines zeitlich vorangehenden und/oder zumindest eines zeitlich nachfolgenden Ladevorgangs repräsentierende Information aufweist. Dabei ist die Anzahl der Datenblöcke größer oder gleich eins.

Des Weiteren wird das Datenpaket an eine Überprüfungseinheit (Prüfstelle, Notar) übermittelt und zweckmäßigerweise dort hinterlegt. Ferner wird die den Startzählerstand und/oder den Endzählerstand repräsentierende Information eines der Datenblöcke mit der den Startzählerstand und/oder den Endzählerstand repräsentierenden Information des oder eines nachfolgenden Datenblocks verglichen. Insbesondere wird dabei die den Endzählerstand repräsentierende Information einer der Datenblöcke, welcher einem ersten Ladevorgang zugeordnet ist, mit der den Startzählerstand repräsentierenden Information des Datenblocks des entsprechenden, zeitlich nächsten (direkt auf den ersten folgenden) Ladevorgangs verglichen.

Alternativ oder Zusätzlich wird die den Endzählerstand repräsentierende Information des in der Überprüfungseinheit hinterlegten Datenblocks des entsprechenden zeitlich letzten Ladevorgangs mit dem Zählerstand der Ladestation verglichen.

Liegt eine Abweichung der auf diese Weise verglichenen Informationen vor, stimmt also insbesondere der mittels der Informationen repräsentierte Endzählerstand des ersten Ladevorgangs nicht mit dem Startzählerstand des zeitlich nächsten Ladevorgangs bzw. der Endzählerstand des Datenblocks des zeitlich letzten Ladevorgangs nicht mit dem Zählerstand der Ladestation überein, so liegt ein Fehler bei der Erfassung oder bei der Weiterverarbeitung der Messdaten, insbesondere des Startzählerstandes und/oder des Endzählerstandes und/oder des Zeitstempels und/oder eine Manipulation dieser oder der diese repräsentierenden Informationen, vor.

Beispielsweise umfasst der Datenblock und/oder die weiteren Datenblöcke zusätzlich eine Information über eine Ladezeit (Zeitstempel), und/oder eine Abrechnungsidentifikation (Abrechnungsnummer), und/oder eine fortlaufende Nummer, und/oder eine Kundenzuordnung, z.B. (RFID-Nummer), und/oder eine Energiezähleridentifikation, beispielsweise eine Seriennummer des Energiezählers, und/oder eine äquivalente Information zur Identifikation des Zählers und/oder eine Ladevorgangsidentifikation. Insbesondere ist es aufgrund der Zusammenfassung des Startzählerstands und des Endzählerstands zu einer diese Werte repräsentierenden Information sowie mittels einer zusätzlichen Information beispielsweise über einen Zeitstempel und/oder einer Energiezähleridentifikation ermöglicht, die beim entsprechenden Ladevorgang bezogene Energie(menge) zu bestimmen und zusätzlich oder alternativ den Ladevorgang zu identifizieren.

Insbesondere repräsentiert insbesondere jeder Datenblock einen Ladevorgang. Beispielsweise wird das Datenpaket einmal nach Ablauf eines festgelegten Zeitintervalls, z. B. täglich, an die Überprüfungseinheit (Notar) übermittelt. Alternativ oder zusätzlich wird das Datenpaket nach jedem Ladevorgang an die Überprüfungseinheit übermittelt.

Alternativ oder zusätzlich werden gemäß einer vorteilhaften Weiterbildung nach jedem Ladevorgang die Datenblöcke entsprechend einer vorgegebenen oder dynamisch variablen Anzahl an vorangehenden Ladevorgängen, beispielsweise jeweils die Datenblöcke entsprechend der letzten 100 Ladevorgänge, zum Datenpaket verknüpft und an die Überprüfungseinheit übertragen. Bei einer vorgegebenen Anzahl an Datenblöcken für das Datenpaket ist eine zu übertragende Datenmenge konstant, und sie enthält Informationen über die vorgenommenen Ladevorgänge redundant, was insbesondere die Sicherheit hinsichtlich einer Manipulation erhöht. Zudem können Fehler, beispielsweise bei der Übertragung oder der Erstellung des Datenpakets, vergleichsweise einfach detektiert und behoben werden.

Alternativ oder zusätzlich hierzu wird das Datenpaket bei einem Ladevorgang um den entsprechenden Datenblock erweitert, bis eine vorgegebene Anzahl an Datenblöcken zum Datenpaket verknüpft ist. Diese wird anschließend an die Überprüfungseinheit übertragen. Mit anderen Worten werden die zum Datenpaket verknüpften Datenblöcke blockweise an die Überprüfungseinheit übertragen. Alternativ oder zusätzlich kann der dem Ladevorgang entsprechende Datenblock einzeln nach dem Ladevorgang an die Überprüfungseinheit übertragen werden. Insbesondere wird das Datenpaket mittels einer Recheneinheit der Ladestation (Ladesäule) gebildet.

Geeigneterweise wird für den Vergleich zwischen dem Zählerstand des Energiezählers und der den Endzählerstand repräsentierenden Information des Datenblocks dasjenige Datenpaket herangezogen, welche den Datenblock des zeitlich letzten Ladevorgangs umfasst und bei der Überprüfungseinheit hinterlegt ist.

Gemäß einer vorteilhaften Ausgestaltung des Verfahrens werden der Startzählerstand des Ladevorgangs, der Endzählerstand des Ladevorgangs und/oder eine zur Identifikation des Ladevorgangs und /oder des Zählers geeignete Information, beispielsweise die oben genannte Ladevorgangsidentifikation oder die Seriennummer des Zählers, dem Kunden bereitgestellt, beispielsweise an einem Display der Ladestation angezeigt und/oder beispielsweise als Abrechnungsdaten, insbesondere in elektronischer Form, etwa einer E-Mail oder einer SMS (short message service), an den Nutzers weitergeleitet. Zweckmäßig werden die Abrechnungsdaten dabei vom Abrechnungscomputer bereitgestellt. Beispielsweise umfassen die Abrechnungsdaten zusätzlich zur Information über den Startzählerstand und den Endzählerstand insbesondere die Kosten des Ladevorgangs bzw. die Kosten je normierte Energiemenge beim Ladevorgang, die Ladezeit (Zeitstempel), die Abrechnungsidentifikation (Abrechnungsnummer), die fortlaufende Nummer, die Kundenzuordnung (z.B. RFID-Nummer), die Energiezähleridentifikation und/oder die Ladevorgangsidentifikation.

Vermutet der Kunde eine Manipulation der Abrechnungsdaten, kann der Kunde beispielsweise einen Vergleich der vom Kunden am Display der Ladestation angezeigten Informationen oder die dem Kunden weitergeleiteten Abrechnungsdaten mit der in der Überprüfungseinheit hinterlegten Informationen des entsprechenden Datenblocks desentsprechenden Datenpakets veranlassen. Aus einer mittels dieses Vergleichs ermittelten Abweichung kann dann auf einen Fehler bei der Erfassung oder bei der Weiterverarbeitung der Messdaten, beispielsweise des Startzählerstandes und/oder des Endzählerstandes und/oder des Zeitstempels, und/oder eine Manipulation dieser oder der diese repräsentierenden Informationen geschlossen werden.

Gemäß einer vorteilhaften Weiterbildung weist der Datenblock und/oder die weiteren Datenblöcke jeweils eine Information auf, welche eine Ladezeitdauer repräsentiert. Beispielsweise kann somit zusätzlich Parkzeit nach Beendigung des Ladevorgangs abgerechnet werden.

Aus Gründen einer korrekten, zeitlich eichbaren Abrechnung der Ladezeitdauer eines Elektrofahrzeugs an einer Ladestation ist es nicht ausreichend, den Zeitpunkt des Starts des Ladevorgangs (Startzeitpunkt) und den Zeitpunkt des Endes des Ladevorgangs (Endzeitpunkt) auf Basis einer typischen Zeitmessung mittels einer herkömmlichen Uhr heranzuziehen und die Zeitdifferenz als Ladezeitdauer zu verwenden. Grund hierfür sind typische Zeitabweichungen herkömmlicher Uhren und eine fehlende Eichung der Uhren auf eine einheitliche, eindeutige Referenzzeit.

Hierzu wird die die Ladezeitdauer repräsentierende Information anhand einer Anzahl an Sinuswellen der Netzspannung und/oder des Netzstroms des an der Ladestation angeschlossenen Versorgungsnetzes zwischen dem Zeitpunkt des Starts des Ladevorgangs und dem Zeitpunkt des Endes des Ladevorgangs erzeugt.

Auslöser und Ende des Zählvorgangs, welche den Zeitpunkt des Starts des Ladevorgangs und dem Zeitpunkt des Endes des Ladevorgangs definieren, ist insbesondere der Moment der Herstellung der elektrischen Verbindung des Fahrzeugs mit der Ladestation, bzw. der Moment, in dem diese (elektrische) Verbindung gelöst (unterbrochen) wird.

Beispielsweise wird mittels der Anzahl der (erfassten) Sinuswellen und einer Nennfrequenz des Versorgungsnetzes, beispielsweise 50 Hz, die Ladezeitdauer bestimmt oder die so ermittelte Anzahl als Zeitreferenz herangezogen.

Gemäß einer geeigneten Weiterbildung wird die lokale Ortszeit zum Zeitpunkt des Starts des Ladevorgangs und dem Zeitpunkt des Endes des Ladevorgangs erfasst, wobei für die die Zeitdauer zwischen dem Zeitpunkt des Starts des Ladevorgangs und dem Zeitpunkt des Endes des Ladevorgangs die vorhandene mittlere Netzfrequenz des Versorgungsnetzes mit Hilfe einer Zeitreferenz (z.B. eines Quarzes oder einer Uhr) erfasst wird, und wobei mittels der Anzahl der Sinuswellen der Netzspannung und/oder des Netzstroms des Versorgungsnetzes und der mittleren Netzfrequenz des Versorgungsnetzes und/oder der bekannten (Soll-, Nenn-) Netzfrequenz die Ladezeitdauer bestimmt wird. Die Soll-Netzfrequenz oder auch Nennfrequenz des Stromnetzes oder auch Netzfrequenz ist hierbei die in einem (Versorgungsnetz) Stromnetz der elektrischen Energieversorgung, insbesondere der Ladestation, mittels deren zeitlich Verlaufs der Wechselspannung definierte Frequenz. Die Netzfrequenz ist hierbei im gesamten Stromversorgungsnetz einheitlich und, bis auf kleinere regeltechnische Abweichungen vom Nennwert, zeitlich konstant. Die Netzfrequenz wird üblicherweise in Hertz (Hz) definiert und angegeben.

Auf diese Weise erfolgt eine vergleichsweise genaue Bestimmung der Ladezeitdauer, da die mittlere Netzfrequenz von der Nennfrequenz des Versorgungsnetzes abweichen kann. In einer weiteren geeigneten Weiterbildung wird mittels der bekannten und/oder definierten Soll-Netzfrequenz und der Anzahl der gezählten Sinuswellen eine Zeitspanne ermittelt und diese in den Abrechnungsvorgang eines Ladevorganges einbezogen.

Gemäß einer Zweckmäßigen Ausgestaltung wird zum Erfassen der Anzahl der Sinuswellen der Netzspannung und/oder des Netzstroms des Versorgungsnetzes der zeitliche Verlauf der Netzspannung bzw. des Netzstromes, insbesondere nach Art eines Analog-Digital-Wandlers, abgetastet. Insbesondere wird hierzu bzw. zur Ermittlung der mittleren Netzfrequenz ein eine bestimmte Taktfrequenz bereitstellender Quarz oder dergleichen verwendet.

Durch die hohe Stabilität der Stromnetzfrequenz ist die Genauigkeit einer Zeitdefinition und/oder einer Definition einer Zeitspanne oder Zeitdauer, insbesondere der Ladedauer (Ladezeitdauer) vorteilhafterweise vergleichsweise genau. Zudem ist der Einsatz einer Uhr für die Ermittlung nicht notwendig und wird zweckmäßigerweise auch nicht verwendet.

Zusammenfassend weist der Datenblock und/oder die weiteren Datenblöcke eine den Startzählerstand und/oder den Endzählerstand des Ladevorgangs repräsentierende Information und vorzugsweise zusätzlich eine Information über die die Seriennummer des (Energie-) Zählers oder eine äquivalente Information zur Identifikation des Zählers auf. Des Weiteren weisen die Datenblöcke auch weitere Informationen über die Startzeit des Zählvorgangs bzw. des Ladevorgangs, Endzeit des Zählvorgangs bzw. des Ladevorgangs, Dauer des Zählvorgangs bzw. des Ladevorgangs und/oder die Anzahl der während des Zählvorgangs bzw. des Ladevorgangs durchlaufenen Sinuswellen der Netzspannung und/oder des Netzstromes einer oder mehrerer der Stromleitungen eines an die Ladestation angeschlossenen Versorgungsnetzes, welche Anzahl insbesondere mittels des Energiezählers erfasst wird.

Ferner ist erfindungsgemäß eine Überprüfungseinheit zur Überprüfung eines von einem Energiezähler einer Ladestation für ein elektrisch angetriebenes Kraftfahrzeug bereitgestellten Zählerstandes vorgesehen (bereitgestellt). Die Überprüfungseinheit weist eine Empfangseinheit zum Empfangen eines Datenpakets mit einer Anzahl von Datenblöcken auf, deren jeder eine den Startzählerstand und den Endzählerstand des Ladevorgangs repräsentierende Information aufweist. Alternativ oder zusätzlich umfasst die Überprüfungseinheit ein Speichermedium, auf welchem das empfangene Datenpaket hinterlegbar und hinterlegt ist.

Alternativ oder zusätzlich weist die Überprüfungseinheit eine Vergleichseinheit zur Ermittlung einer Abweichung der im Speichermedium hinterlegten Information über den Endzählerstand des letzten Datenblocks von dem Zählerstand der Ladestation und/oder zur Ermittlung einer Abweichung der den Startzählerstand bzw. den Endzählerstand repräsentierenden Information eines der Datenblöcke von der den Startzählerstand bzw. den Endzählerstand repräsentierenden Information des oder eines nachfolgenden Datenblocks auf.

Vorzugsweise ist die Überprüfungseinheit räumlich von der Ladestation und/oder von der Abrechnungseinheit getrennt. Ein Übermittlung des Datenpakets erfolgt beispielsweise kabellos, beispielsweise mittels eines Mobilfunknetzes oder alternativ kabelgebunden, beispielsweise mittels einer Power-Line Communication über ein Energiekabel.

Des Weiteren ist erfindungsgemäß ein Ladesystem für ein elektrisch angetriebenes Kraftfahrzeug vorgesehen. Das Ladesystem umfasst eine Ladestation mit einem Energiezähler und mit einer Recheneinheit zur Erstellung eines Datenpakets mit einer Anzahl von Datenblöcken, deren jeder eine den Startzählerstand und den Endzählerstand des Ladevorgangs repräsentierende Information aufweist. Zusätzlich oder alternativ weist das Ladesystem eine an die Ladestation gekoppelte oder in diese integrierte Abrechnungseinheit zur Bereitstellung von Abrechnungsdaten für einen Benutzer sowie zusätzlich oder alternativ eine Überprüfungseinheit zur Überprüfung des vom Energiezähler der Ladestation bereitgestellten Zählerstandes auf. Weiter zusätzlich oder alternativ umfasst das Ladesystem Übertragungsmittel zur Übertragung des Datenpakets der Ladestation an die Überprüfungseinheit.

Die im Zusammenhang mit dem Verfahren dargelegten Ausführungen gelten dabei entsprechend für das Ladesystem sowie für die Überwachungseinheit und umgekehrt.

Nachfolgend ist ein Ausführungsbeispiel der Erfindung anhand einer Zeichnung näher erläutert.

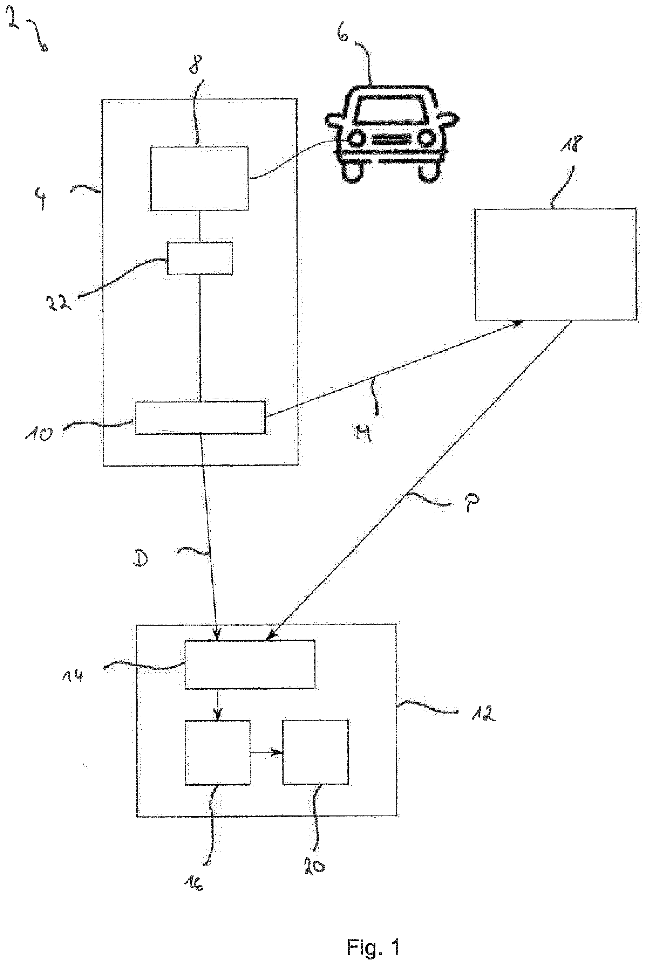

Die Fig. 1 zeigt ein auch als Ladeinfrastruktur bezeichnetes Ladesystem 2. Dieses weist eine Ladestation 4 für ein elektrisch angetriebenes Kraftfahrzeug 6 mit einem Energiezähler 8 und mit einer Recheneinheit 10 zur Erstellung eines Datenpakets D auf.

Einmal täglich wird das Datenpaket D mittels eines Übertragungsmittels des Ladesystems 2 an eine Überprüfungseinheit 12 (Notar) des Ladesystems 2 übertragen. Das Übertragungsmittel ist beispielsweise ein Kabel oder ein Funksystem zur kabellosen Übertragung. Eine Empfangseinheit 14 der Überprüfungseinheit 12 empfängt das Datenpaket D. Anschließend wird dieses auf einem Speichermedium 16 der Überprüfungseinheit 12 hinterlegt. Alternativ wird ein dem Ladevorgang entsprechender Datenblock zusammen mit einer vorgegebenen Anzahl, beispielsweise einhundert, weiterer Datenblöcke, welche dem Ladevorgang zeitlich vorangehender Ladevorgänge entsprechen, zum Datenpaket D zusammenfügt und an die Überprüfungseinheit 12 übertragen. Der Datenblock und die weiteren Datenblöcke des Datenpakets D weisen dabei jeweils eine Information auf, welche den Startzählerstand und/oder den Endzählerstand des entsprechend zugeordneten Ladevorgangs repräsentiert.

Des Weiteren weist der Datenblock und die weiteren Datenblöcke jeweils eine Information auf, welche eine Ladezeitdauer repräsentiert. Dabei wird die die Ladezeitdauer repräsentierende Information anhand einer Anzahl an Sinuswellen der Netzspannung und/oder des Netzstroms des Versorgungsnetzes zwischen dem Zeitpunkt des Starts des Ladevorgangs und dem Zeitpunkt des Endes des Ladevorgangs erzeugt.

Hierzu wird für die die Zeitdauer zwischen dem Zeitpunkt des Starts des Ladevorgangs und dem Zeitpunkt des Endes des Ladevorgangs die vorhandene mittleren Netzfrequenz des Versorgungsnetzes erfasst, beispielsweise gemessen oder über einen Service des Netzbetreibers geladen. Anschließen wird mittels der Anzahl der Sinuswellen der Netzspannung und/oder des Netzstroms des Versorgungsnetzes und der mittleren Netzfrequenz des Versorgungsnetzes die Ladezeitdauer bestimmt wird. Insbesondere wird hierzu die Anzahl der Sinuswellen durch die mittlere Netzfrequenz oder durch die bekannte Soll-Netzfrequenz dividiert.

Beispielsweise zusätzlich wird die lokale Ortszeit zum Zeitpunkt des Starts des Ladevorgangs und dem Zeitpunkt des Endes des Ladevorgangs erfasst und eine entsprechende Information dem Datenblock, insbesondere bei dessen Erstellung, hinzugefügt.

Zum Erfassen der Anzahl der Sinuswellen der Netzspannung und/oder des Netzstroms des Versorgungsnetzes wird nach Art eines Analog-Digital-Wandlers der zeitliche Verlauf der Netzspannung bzw. des Netzstromes abgetastet.

Ferner wird das Datenpaket D oder ein Messdatensatz M, welcher zumindest eine Information über den Startzählerstand, den Endzählerstand und eine Identifikation des Ladevorgangs aufweist, an eine mittels des Übertragungsmittels des Ladesystems 2 mit der Ladestation 4 gekoppelte (verbundene) Abrechnungseinheit 18 des Ladesystems 2 übermittelt. Diese bestimmt den Tarif (die Kosten) des Ladevorgangs und übermittelt ein Tarifdatenpaket P, beispielsweise einmal täglich, an die Überprüfungseinheit 12, wo sie von deren Empfangseinheit 14 empfangen wird. Beispielsweise umfasst das Tarifdatenpaket P analog zum Datenpaket D Informationen über die entsprechenden Ladevorgänge, beispielsweise eine Information über die Kosten des Ladevorgangs (Tarif) oder die Kosten je Energieeinheit für das Laden des Kraftfahrzeugs 6, den Startzählerstand, den Endzählerstand, der Ladezeitdauer, einer Nutzeridentifikation, und/oder über eine Identifikation des Ladevorgangs.

Infolgedessen ist beispielsweise ein Vergleich der Informationen des Tarifdatenpakets P mit den Informationen des Datenpakets bei der Überprüfungseinheit 12 mittels dessen Vergleichseinheit 20 ermöglicht ist. Zur Ermittlung einer Abweichung der im Speichermedium 16 hinterlegten Information mit der entsprechenden Information des Tarifdatenpakets, mit der dem Nutzer bereitgestellten Informationen und/oder zur Überprüfung des Zählerstandes der Ladestation 4 wird hierbei die den Startzählerstand und/oder den Endzählerstand repräsentierende Information einer der Datenblöcke mit der den Startzählerstand und/oder den Endzählerstand repräsentierenden Information des oder eines nachfolgenden Datenblocks verglichen, und/oder die den Endzählerstand repräsentierende Information des in der Überprüfungseinheit 12 hinterlegten Datenblocks des zeitlich letzten Ladevorgangs mit dem Zählerstand der Ladestation 4 verglichen. Zusammenfassend kann auf diese Weise auf einen Fehler oder auf eine Manipulation geschlossen werden.

Bei der Überprüfungseinheit 12 ist die vollständige (komplette) Datenpaket D, hinterlegt. Beispielsweise werden im Zuge der Überprüfung, insbesondere die vom Energiezähler 8 der Ladestation 4 bereitgestellten Zählerstände und/oder Ziffern (Zahlen, Werte) der Datenblöcke miteinander verglichen. Beispielsweise werden die letzten zehn Ziffern einer der Datenblöcke des Datenpakets mit den ersten zehn Ziffern des darauf folgenden Datenblocks verglichen. Dabei entsprechen beispielsweise die letzten zehn Ziffern der den Endzählerstand repräsentierenden Information und die ersten zehn Ziffern der den Startzählerstand repräsentierenden Information und/oder einer Signatur und/oder eines Schlüssels und/oder eines Hash-Wertes. Die Anzahl der zur Prüfung heranzuziehenden Ziffern ist hierbei vorzugsweise mindestens gleich der Anzahl der den Zählerstand definierenden Ziffern.

Ferner sind der Zählerwert, beispielsweise der auch als Startzählerwert bezeichnete Startzählerstand des Ladevorgangs, der Endzählerstand des Ladevorgangs sowie der aktuelle Zählerwert, die Zeit und/oder die Nutzeridentifikation für den Nutzer, auf dem Display 22 der Ladesäule (Ladestation 4) dargestellt, oder der oder diese Werte werden dem Nutzer beispielsweise mittels einer SMS weitergeleitet, so dass der Nutzer die Werte bei der Überprüfungseinheit 12 überprüfen kann.

Eine Signatur ist aufgrund einer nicht definierten bzw. definierbaren (Lauf-)Zeit, welcher zur Übertragung der Daten, insbesondere des Datenpakets D, notwendig war, nicht ausreichend, insbesondere aufgrund einer kryptografisch nicht ausreichenden Sicherung des NTP (Network Time Protocol), welches, insbesondere zur Angabe der Laufzeit bei der Übertragung von Datenpaketen, herangezogen wird.

Um zu verhindern, dass eine Zeit (der Zeitstempel) kompromittiert oder manipuliert wird, sind für die Ladesäule sowie für den Notar jeweils ein Zeitempfänger (nicht dargestellt) notwendig, wobei die Zeitempfänger die Zeit aus zwei zueinander unabhängigen (Zeit-) Quellen (Uhren) empfangen. Beispielsweise empfängt dabei jeder Zeitempfänger die Zeit beider unabhängiger Quellen, oder einer der Zeitempfänger empfängt die Zeit von einer der beiden Quellen und der andere Zeitempfänger empfängt die Zeit entsprechend von der anderen Quelle.

Die Erfindung ist nicht auf die vorstehend beschriebenen Ausführungsbeispiele beschränkt. Vielmehr können auch andere Varianten der Erfindung vom Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen.

## Patentansprüche

1. Verfahren zur Überprüfung eines von einem Energiezähler einer Ladestation für ein elektrisch angetriebenes Kraftfahrzeug bereitgestellten Zählerstandes,
- wobei ein Startzählerstand der Ladestation zu Beginn und ein Endzählerstand nach Abschluss eines Ladevorgangs des elektrisch angetriebenen Kraftfahrzeugs erfasst wird,
- wobei ein Datenpaket mit einem Datenblock erstellt wird, der eine den Startzählerstand und/oder den Endzählerstand des Ladevorgangs repräsentierende Information aufweist, oder wobei ein Datenpaket erstellt wird, welches sowohl einen Datenblock mit einer den Startzählerstand und/oder den Endzählerstand des Ladevorgangs repräsentierende Information als auch eine Anzahl an weiteren Datenblöcken aufweist, die jeweils eine den Startzählerstand und/oder den Endzählerstand zumindest eines zeitlich vorangehenden und/oder zumindest eines zeitlich nachfolgenden Ladevorgangs repräsentierende Information aufweist,
- wobei das Datenpaket an eine Überprüfungseinheit übermittelt und/- oder dort hinterlegt wird, und
- wobei die den Startzählerstand und/oder den Endzählerstand repräsentierende Information einer der Datenblöcke mit der den Startzählerstand und/oder den Endzählerstand repräsentierenden Information des oder eines nachfolgenden Datenblocks verglichen wird, und/oder wobei die den Endzählerstand repräsentierende Information des in der Überprüfungseinheit hinterlegten Datenblocks des zeitlich letzten Ladevorgangs mit dem Zählerstand der Ladestation verglichen wird.

2. Verfahren nach Anspruch 1, wobei der dem Ladevorgang entsprechende Datenblock zusammen mit einer vorgegebenen Anzahl der weiteren Datenblöcke, welche dem Ladevorgang zeitlich vorangehender Ladevorgänge entsprechen, zum Datenpaket zusammenfügt wird.

3. Verfahren nach Anspruch 1 oder 2, wobei der Datenblock und/oder die weiteren Datenblöcke jeweils eine Information aufweisen, welche eine Ladezeitdauer repräsentiert.

4. Verfahren nach Anspruch 3, wobei die die Ladezeitdauer repräsentierende Information anhand einer Anzahl an Sinuswellen der Netzspannung und/- oder des Netzstroms eines an die Ladestation angeschlossenen Versorgungsnetzes zwischen dem Zeitpunkt des Starts des Ladevorgangs und dem Zeitpunkt des Endes des Ladevorgangs erzeugt wird.

5. Verfahren nach Anspruch 4,
- wobei für die Zeitdauer zwischen dem Zeitpunkt des Starts des Ladevorgangs und dem Zeitpunkt des Endes des Ladevorgangs die vorhandene mittlere Netzfrequenz des Versorgungsnetzes erfasst wird, und
- wobei mittels der Anzahl der Sinuswellen der Netzspannung und/oder des Netzstroms des Versorgungsnetzes und der mittleren Netzfrequenz oder der bekannten Soll-Netzfrequenz des Versorgungsnetzes die Ladezeitdauer bestimmt wird.

6. Verfahren nach Anspruch 4 oder 5, wobei zum Erfassen der Anzahl der Sinuswellen der Netzspannung und/oder des Netzstroms des Versorgungsnetzes der zeitliche Verlauf der Netzspannung bzw. des Netzstromes, insbesondere nach Art eines Analog-Digital-Wandlers, abgetastet wird.

7. Verfahren nach einem der Ansprüche 1 bis 6, wobei einem Nutzer der Startzählerstand des Ladevorgangs, der Endzählerstand des Ladevorgangs und/oder eine zur Identifikation des Ladevorgangs geeignete Information bereitgestellt wird, um einen Vergleich der an die Überprüfungseinheit übermittelten Informationen mit dem dem Nutzer bereitgestellten Startzählerstand und dem Endzählerstand zu ermöglichen.

8. Überprüfungseinheit zur Überprüfung eines von einem Energiezähler einer Ladestation für ein elektrisch angetriebenes Kraftfahrzeug bereitgestellten Zählerstandes, aufweisend
- eine Empfangseinheit zum Empfangen eines Datenpakets mit einer Anzahl von Datenblöcken, deren jeder eine den Startzählerstand und/oder den Endzählerstand eines dem jeweiligen Datenblock zugeordneten Ladevorgangs repräsentierende Information aufweist,
- ein Speichermedium zur Hinterlegung des empfangenen Datenpakets, und/oder
- eine Vergleichseinheit zur Ermittlung einer Abweichung der im Speichermedium hinterlegten Information über den Endzählerstand des letzten Datenblocks von dem Zählerstand der Ladestation und/oder zur Ermittlung einer Abweichung der den Startzählerstand bzw. den Endzählerstand repräsentierende Information eines der Datenblöcke von der den Startzählerstand bzw. den Endzählerstand repräsentierenden Information des oder eines nachfolgenden Datenblocks.

9. Ladesystem für ein elektrisch angetriebenes Kraftfahrzeug, aufweisend
- eine Ladestation mit einem Energiezähler und mit einer Recheneinheit zur Erstellung eines Datenpakets mit einer Anzahl von Datenblöcken, deren jeder eine den Startzählerstand und/oder den Endzählerstand eines dem Datenblock zugeordneten Ladevorgangs repräsentierende Information aufweist,
- eine an die Ladestation gekoppelte oder in diese integrierte Abrechnungseinheit zur Bereitstellung von Abrechnungsdaten für einen Benutzer,
- eine Überprüfungseinheit zur Überprüfung des vom Energiezähler der Ladestation bereitgestellten Zählerstandes, und/oder
- Übertragungsmittel zur Übertragung des Datenpakets der Ladestation an die Überprüfungseinheit.
